# EUROPEAN PATENT APPLICATION

(11) **EP 4 697 363 A1**
(43) Date of publication of application: **18.02.2026**
(21) Application number: 24788976.9
(22) Date of filing: 09.04.2024
(51) Int. Cl.: G21F 9/30, C03B 5/00, C03B 5/235, C03B 5/24

(54) **GLASS MELTING FURNACE APPARATUS AND METHOD FOR OPERATING SAME**

(30) Priority: 12.04.2023 KR 20230048020
(71) Applicant: Korea Hydro & Nuclear Power Co., Ltd, Gyeongju-si, Gyeongsangbuk-do 38120 (KR)
(72) Inventor: KIM, Deuk Man, Daejeon 34101 (KR); HWANG, Seok Ju, Daejeon 34101 (KR)
(74) Representative: Glawe, Delfs, Moll
(86) International application number: PCT/KR2024/004679
(87) International publication number: WO 2024/215033

(57) **Abstract**

Provided are a glass melting furnace device and a method of operating the same. The method of operating the glass melting furnace device includes: feeding an object to be melted into a lower chamber unit of the glass melting furnace device; and comprehensively monitoring the feeding state of the object to be melted and the operating state of the lower chamber unit in relation to molten glass by using an upper chamber unit of the glass melting furnace device, wherein the upper chamber unit includes: an upper chamber; a main monitoring module mounted on the upper chamber and monitoring the state of the object to be melted while the lower chamber unit is in an operating state for the molten glass; and a first auxiliary monitoring module mounted on the upper chamber and monitoring the state of the object to be melted while the lower chamber unit is in the operating state for the molten glass, wherein the first auxiliary monitoring module operates in any one of a first mode in which the first auxiliary monitoring module operates in combination with the main monitoring module and a second mode in which the first auxiliary monitoring module operates as a replacement for the main monitoring module when the main monitoring module loses its function.

## Description

### [Technical Field]

The present disclosure relates to a glass melting furnace device and a method of operating the same.

### [Background Art]

A cylindrical glass melting furnace that melts glass at high temperature is divided into an upper chamber and a lower chamber. The upper chamber generally has a sealed structure to prevent high-temperature gas from leaking out. In addition, it includes an inlet for feeding waste, an exhaust gas outlet for discharging combustion gas, and an oxygen supply pipe for supplying oxygen for combustion. A cylindrical glass melting furnace operated in a nuclear power system requires a function to monitor glass melting state and abnormal phenomena during operation. However, since existing glass melting furnaces have a single type of monitoring function, it is necessary to improve monitoring and protection functions for stable equipment operation.

### [Disclosure]

### [Technical Problem]

An aspect of the present disclosure is to enable an operator to continuously monitor molten glass using a main camera to monitor the state of the molten glass in real time.

Another aspect of the present disclosure is to prevent unnecessary equipment stoppage for checking a main monitoring unit when there is a problem with the main monitoring unit by performing dual equipment monitoring using a separate monitoring unit when there is a problem with the main monitoring unit.

Another aspect of the present disclosure is to protect equipment by stably stopping the equipment when a high-temperature problem of the equipment is detected through thermal imaging monitoring.

However, aspects of the present disclosure are not restricted to the one set forth herein. The above and other aspects of the present disclosure will become more apparent to one of ordinary skill in the art to which the present disclosure pertains by referencing the detailed description of the present disclosure given below.

### [Technical Solution]

According to an aspect of the present disclosure, there is provided a method of operating a glass melting furnace device. The method includes: feeding an object to be melted into a lower chamber unit of the glass melting furnace device; and comprehensively monitoring the feeding state of the object to be melted and the operating state of the lower chamber unit in relation to molten glass by using an upper chamber unit of the glass melting furnace device, wherein the upper chamber unit includes: an upper chamber; a main monitoring module mounted on the upper chamber and monitoring the state of the object to be melted while the lower chamber unit is in an operating state for the molten glass; and a first auxiliary monitoring module mounted on the upper chamber and monitoring the state of the object to be melted while the lower chamber unit is in the operating state for the molten glass, wherein the first auxiliary monitoring module operates in any one of a first mode in which the first auxiliary monitoring module operates in combination with the main monitoring module and a second mode in which the first auxiliary monitoring module operates as a replacement for the main monitoring module when the main monitoring module loses its function.

In addition, the main monitoring module monitors a first area including at least 2/3 of the object to be melted on the lower chamber unit, and the first auxiliary monitoring module monitors a second area including at least 2/3 of the object to be melted on the lower chamber unit.

In addition, the main monitoring module and the first auxiliary monitoring module monitor opposite areas of the object to be melted with respect to each other in diagonal directions.

In addition, the first area monitored by the main monitoring module and the second area monitored by the first auxiliary monitoring module overlap each other at least partially.

In addition, the upper chamber unit further includes a second auxiliary monitoring module mounted on the upper chamber and measuring and monitoring the temperature of the object to be melted to stop the operation of the molten glass when the main monitoring module and the first auxiliary monitoring module lose their functions.

In addition, the glass melting furnace device further includes a driving unit for moving the second auxiliary monitoring module up and down in the upper chamber unit, and the second auxiliary monitoring module is moved up and down by the driving unit according to the filling level of the molten glass of the lower chamber unit in order to correct the temperature measurement state of the molten glass.

In addition, the second auxiliary monitoring module is positioned vertically in the upper chamber, monitors less than 50% of a surface area of the molten glass, and is located between the main monitoring module and the first auxiliary monitoring module.

In addition, the glass melting furnace device further includes a slab unit located below the lower chamber unit, and the slab unit includes a slab module and a heating module surrounding the periphery of the lower chamber unit in the slab module and heating the object to be melted.

In addition, the lower chamber includes a molten glass temperature measuring module located inside the lower chamber and measuring the internal temperature of the molten glass for the object to be melted, and the glass melting furnace device further includes a control unit, wherein the control unit controls heating of the molten glass to be stopped or heating output of the molten glass to be reduced when a first measurement value, which is a temperature measurement value of the second auxiliary monitoring module for the molten glass and a second measurement value, which is a temperature measurement value of the molten glass temperature measuring module for the molten glass, correspond to a preset condition.

According to another aspect of the present disclosure, there is provided a glass melting furnace device including: an upper chamber unit; and a lower chamber unit into which an object to be melted is fed, wherein the upper chamber unit comprehensively monitors the feeding state of the object to be melted and the operating state of the lower chamber unit in relation to molten glass and includes an upper chamber, a main monitoring module mounted on the upper chamber and monitoring the object to be melted while the lower chamber unit is in an operating state for the molten glass and a first auxiliary monitoring module mounted on the upper chamber and monitoring the object to be melted while the lower chamber unit is in the operating state for the molten glass, wherein the first auxiliary monitoring module operates in any one of a first mode in which the first auxiliary monitoring module operates in combination with the main monitoring module and a second mode in which the first auxiliary monitoring module operates as a replacement for the main monitoring module when the main monitoring module loses its function.

### [Advantageous Effects]

The present disclosure described above provides at least one of the following effects.

The present disclosure enables an operator to continuously monitor molten glass using a main camera to monitor the state of the molten glass in real time.

In addition, it is possible to prevent unnecessary equipment stoppage for checking a main monitoring unit when there is a problem with the main monitoring unit by performing dual equipment monitoring using a separate monitoring unit when there is a problem with the main monitoring unit.

In addition, it is possible to protect equipment by stably stopping the equipment when a high-temperature problem of the equipment is detected through thermal imaging monitoring.

### [Description of Drawings]

FIG. 1 is a block diagram of a glass melting furnace device according to an embodiment of the present disclosure;
FIGS. 2 through 4 are detailed block diagrams of elements of FIG. 1;
FIG. 5 is a configuration diagram illustrating the elements of FIG. 1;

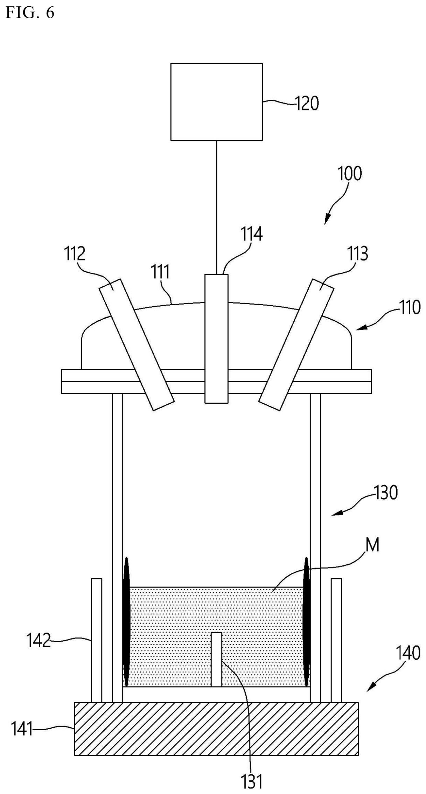

FIG. 6 illustrates the operating state of the elements of FIG. 5; and
FIG. 7 is a flowchart sequentially illustrating a method of operating a glass melting furnace device according to an embodiment of the present disclosure.

### [Best Mode]

The present disclosure discloses a method of operating a glass melting furnace device. The method includes: feeding an object to be melted into a lower chamber unit of the glass melting furnace device; and comprehensively monitoring the feeding state of the object to be melted and the operating state of the lower chamber unit in relation to molten glass by using an upper chamber unit of the glass melting furnace device, wherein the upper chamber unit includes: an upper chamber; a main monitoring module mounted on the upper chamber and monitoring the state of the object to be melted while the lower chamber unit is in an operating state for the molten glass; and a first auxiliary monitoring module mounted on the upper chamber and monitoring the state of the object to be melted while the lower chamber unit is in the operating state for the molten glass, wherein the first auxiliary monitoring module operates in any one of a first mode in which the first auxiliary monitoring module operates in combination with the main monitoring module and a second mode in which the first auxiliary monitoring module operates as a replacement for the main monitoring module when the main monitoring module loses its function.

### [Mode for Invention]

Hereinafter, exemplary embodiments of the present disclosure will be described in further detail with reference to the attached drawings. Advantages and features of the present disclosure and methods of accomplishing the same may be understood more readily by reference to the following detailed description of exemplary embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the present disclosure to those skilled in the art, and the present disclosure will only be defined by the appended claims. Like reference numerals refer to like elements throughout the specification.

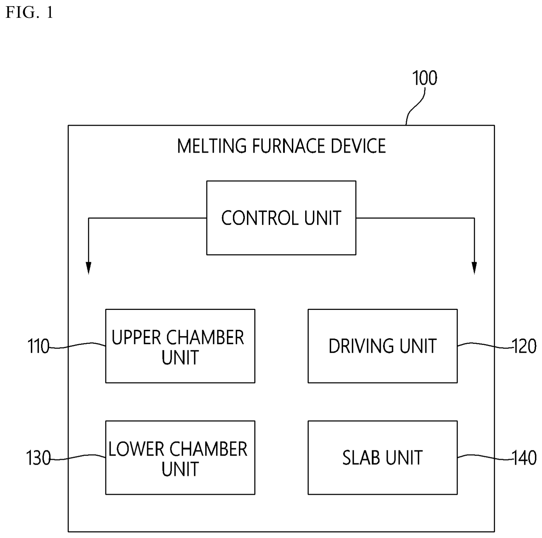

Referring to FIG. 1, a glass melting furnace device (hereinafter, referred to as a "device 100") according to an embodiment of the present disclosure includes an upper chamber unit 110, a driving unit 120, a lower chamber unit 130, a slab unit 140, and a control unit 150.

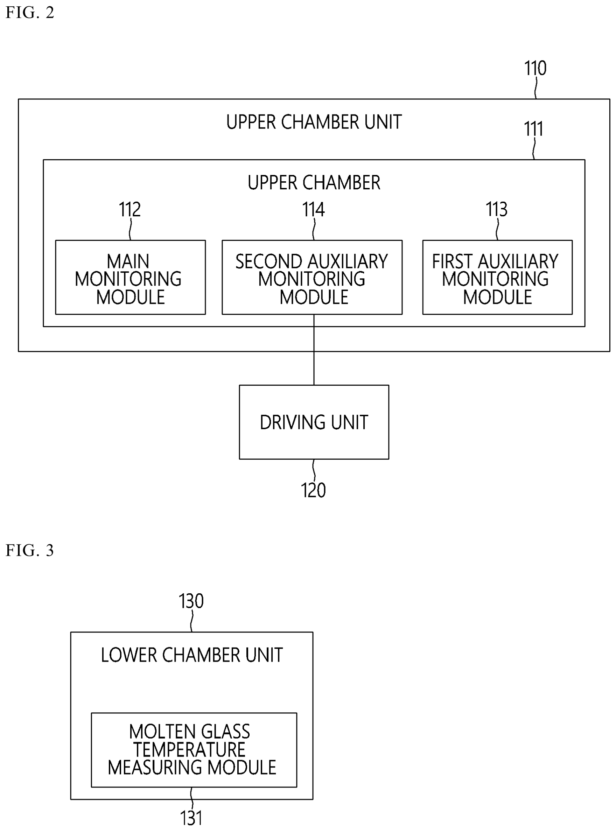

Referring to FIGS. 1 and 2, the upper chamber unit 110 includes a main monitoring module 112, a first auxiliary monitoring module 113, and a second auxiliary monitoring module 114. Referring to FIGS. 1 through 3, the lower chamber unit 130 includes a molten glass temperature measuring module 131.

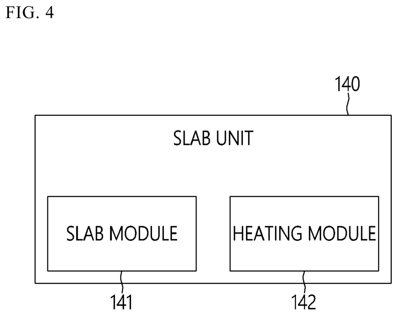

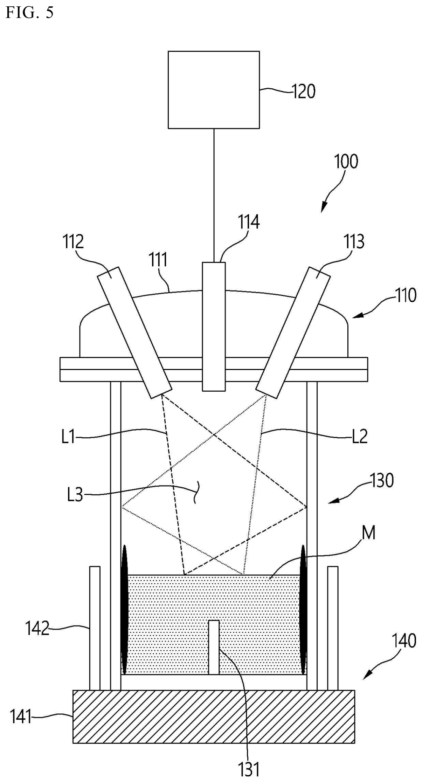

Referring to FIGS. 1 and 4, the slab unit 140 includes a slab module 141 and a heating module 142. Referring to FIG. 5, the upper chamber unit 110 of the device 100 is provided according to a set standard.

An object to be melted is fed into the lower chamber unit 130 of the device 100. The upper chamber unit 110 comprehensively monitors the feeding state of the object to be melted and the operating state of the lower chamber unit 130 in relation to molten glass M.

Here, the main monitoring module 112 of an upper chamber 111 is mounted on the upper chamber 111. The main monitoring module 112 of the upper chamber 111 monitors the object to be melted while the lower chamber unit 130 is in an operating state for the molten glass M.

The first auxiliary monitoring module 113 of the upper chamber 111 is mounted on the upper chamber 111. The first auxiliary monitoring module 113 monitors the object to be melted while the lower chamber unit 130 is in the operating state for the molten glass M.

In addition, the first auxiliary monitoring module 113 of the upper chamber 111 operates in at least any one of a first mode and a second mode. The first auxiliary monitoring module 113 operates in combination with the main monitoring module 112 in the first mode.

When the main monitoring module 112 loses its function, the first auxiliary monitoring module 113 operates as a replacement for the main monitoring module 112 in the second mode. The main monitoring module 112 monitors a first area L1 including at least 2/3 of the object to be melted on the lower chamber unit 130.

In addition, the first auxiliary monitoring module 113 monitors a second area L2 including at least 2/3 of the object to be melted on the lower chamber unit 130. The main monitoring module 112 and the first auxiliary monitoring module 113 monitor opposite areas of the object to be melted with respect to each other in diagonal directions.

Here, the first area L1 monitored by the main monitoring module 112 and the second area L2 monitored by the first auxiliary monitoring module 113 may form an overlap area L3 where they overlap each other at least partially.

The second auxiliary monitoring module 114 of the upper chamber 111 is mounted on the upper chamber 111 and serves to measure and monitor the temperature of the object to be melted.

Accordingly, when the main monitoring module 112 and the first auxiliary monitoring module 113 lose their functions, the second auxiliary monitoring module 114 can stop the operation of the molten glass M. The driving unit 120 of the device 100 moves the second auxiliary monitoring module 114 up and down in the lower chamber unit 130.

The second auxiliary monitoring module 114 is moved up and down by the driving unit 130 according to the filling level of the molten glass M of the lower chamber unit 130 in order to correct the temperature measurement state of the molten glass M.

In addition, the second auxiliary monitoring module 114 is positioned vertically in the upper chamber 111 and monitors less than 50% of the surface area of the molten glass M. In addition, it is located between the main monitoring module 112 and the first auxiliary monitoring module 113.

The slab module 141 of the slab unit 140 is provided according to a set standard. The heating module 142 of the slab unit 140 surrounds the periphery of the lower chamber unit 130 in the slab module 141 and heats the object to be melted.

In addition, the molten glass temperature measuring module 131 of the lower chamber unit 130 is located inside the lower chamber unit 130 and measures the internal temperature of the molten glass M for the object to be melted.

The control unit 150 of the device 100 controls heating of the molten glass M to be stopped or heating output of the molten glass M to be reduced when a first measurement value, which is a temperature measurement value of the second auxiliary monitoring module 114 for the molten glass M and a second measurement value, which is a temperature measurement value of the molten glass temperature measuring module 131 for the molten glass M, correspond to a preset condition.

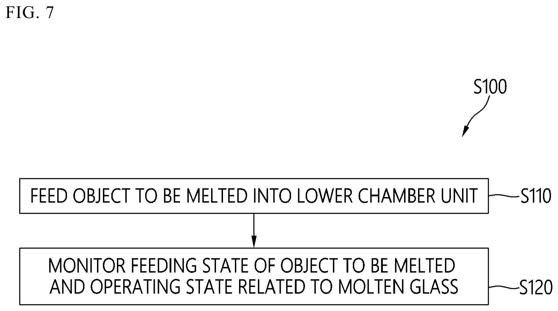

FIG. 7 is a flowchart sequentially illustrating a method of operating a glass melting furnace device according to an embodiment of the present disclosure. Redundant descriptions of elements and features identical to those described above will be partially omitted below.

Referring to FIG. 7, in the method S100 of operating the glass melting furnace, an object to be melted is fed into a lower chamber unit 130 of a glass melting furnace device 100 (operation S110). Then, an upper chamber unit 110 of the glass melting furnace device 100 comprehensively monitors the feeding state of the object to be melted and the operating state of the lower chamber unit 130 in relation to molten glass M (operation S112).

A main monitoring module 112 of the glass melting furnace device 100 is mounted on an upper chamber 111 and monitors the state of the object to be melted while the lower chamber unit 130 is in an operating state for the molten glass M.

In addition, a first auxiliary monitoring module 113 of the melting furnace device 100 is mounted on the upper chamber 111 and monitors the state of the object to be melted while the lower chamber unit 130 is in the operating state for the molten glass M.

While the present disclosure has been particularly shown and described with reference to exemplary embodiments thereof, it will be understood by those of ordinary skill in the art that various changes in form and detail may be made therein without departing from the spirit and scope of the present disclosure as defined by the following claims. The exemplary embodiments should be considered in a descriptive sense only and not for purposes of limitation.

## Claims

1. A method of operating a glass melting furnace device, the method comprising:
feeding an object to be melted into a lower chamber unit of the glass melting furnace device; and
comprehensively monitoring the feeding state of the object to be melted and the operating state of the lower chamber unit in relation to molten glass by using an upper chamber unit of the glass melting furnace device,
wherein the upper chamber unit comprises:
an upper chamber;
a main monitoring module mounted on the upper chamber and monitoring the state of the object to be melted while the lower chamber unit is in an operating state for the molten glass; and
a first auxiliary monitoring module mounted on the upper chamber and monitoring the state of the object to be melted while the lower chamber unit is in the operating state for the molten glass,
wherein the first auxiliary monitoring module operates in any one of a first mode in which the first auxiliary monitoring module operates in combination with the main monitoring module and a second mode in which the first auxiliary monitoring module operates as a replacement for the main monitoring module when the main monitoring module loses its function.

2. The method of claim 1, wherein the main monitoring module monitors a first area comprising at least 2/3 of the object to be melted on the lower chamber unit, and the first auxiliary monitoring module monitors a second area comprising at least 2/3 of the object to be melted on the lower chamber unit.

3. The method of claim 2, wherein the main monitoring module and the first auxiliary monitoring module monitor opposite areas of the object to be melted with respect to each other in diagonal directions.

4. The method of claim 3, wherein the first area monitored by the main monitoring module and the second area monitored by the first auxiliary monitoring module overlap each other at least partially.

5. The method of claim 1, wherein the upper chamber unit further comprises a second auxiliary monitoring module mounted on the upper chamber and measuring and monitoring the temperature of the object to be melted to stop the operation of the molten glass when the main monitoring module and the first auxiliary monitoring module lose their functions.

6. The method of claim 1, wherein the glass melting furnace device further comprises a driving unit for moving the second auxiliary monitoring module up and down in the upper chamber unit, and the second auxiliary monitoring module is moved up and down by the driving unit according to the filling level of the molten glass of the lower chamber unit in order to correct the temperature measurement state of the molten glass.

7. The method of claim 5, wherein the glass melting furnace device further comprises a slab unit located below the lower chamber unit, and the slab unit comprises a slab module and a heating module surrounding the periphery of the lower chamber unit in the slab module and heating the object to be melted.

8. The method of claim 7, wherein the lower chamber comprises a molten glass temperature measuring module located inside the lower chamber and measuring the internal temperature of the molten glass for the object to be melted, and the glass melting furnace device further comprises a control unit, wherein the control unit controls heating of the molten glass to be stopped or heating output of the molten glass to be reduced when a first measurement value, which is a temperature measurement value of the second auxiliary monitoring module for the molten glass and a second measurement value, which is a temperature measurement value of the molten glass temperature measuring module for the molten glass, correspond to a preset condition.

9. A glass melting furnace device comprising:
an upper chamber unit; and
a lower chamber unit into which an object to be melted is fed,
wherein the upper chamber unit comprehensively monitors the feeding state of the object to be melted and the operating state of the lower chamber unit in relation to molten glass and comprises an upper chamber, a main monitoring module mounted on the upper chamber and monitoring the object to be melted while the lower chamber unit is in an operating state for the molten glass and a first auxiliary monitoring module mounted on the upper chamber and monitoring the object to be melted while the lower chamber unit is in the operating state for the molten glass, wherein the first auxiliary monitoring module operates in any one of a first mode in which the first auxiliary monitoring module operates in combination with the main monitoring module and a second mode in which the first auxiliary monitoring module operates as a replacement for the main monitoring module when the main monitoring module loses its function.
